# EUROPÄISCHE PATENTSCHRIFT

(11) **EP 1 018 602 B1**
(45) Veröffentlichungstag und Bekanntmachung des Hinweises auf die Patenterteilung: **02.04.2003**
(21) Anmeldenummer: 99125684.3
(22) Anmeldetag: 22.12.1999
(51) Int. Cl.: F16B 12/14, F16B 13/12

(54) **Möbelbeschlag**
Fitting for furniture
Ferrure pour meubles

(30) Priorität: 05.01.1999 AT 1099
(43) Veröffentlichungstag der Anmeldung: 12.07.2000
(73) Patentinhaber: Julius Blum Gesellschaft m.b.H., 6973 Höchst (AT)
(72) Erfinder: Huber, Edgar, 6971 Hard (AT)
(74) Vertreter: Torggler, Paul Norbert, Dr.

(56) Entgegenhaltungen:
- EP-A- 0 171 745
- EP-A- 0 400 535
- EP-A- 0 950 819
- WO-A-99/24723
- DE-A- 4 438 408
- GB-A- 2 182 995

## Beschreibung

Die Erfindung bezieht sich auf einen Beschlag zur lösbaren Befestigung an einem Möbelteil mit einem am Möbelteil anliegenden, vorzugsweise plattenförmigen Beschlagkörper, mit einer möbelseitigen Montagefläche und einer gegenüberliegenden Sichtfläche, mindestens einer im Beschlagkörper verankerten Spreizhülse, die in eine Bohrung des Möbelteiles einsetzbar ist, und einem stiftförmigen Spreizteil für die Spreizhülse, der mit einem Außengewinde versehen ist und der durch eine Öffnung im Beschlagkörper ragt, wobei er von der Sichtfläche des Beschlages durch diesen durchgesteckt ist.

Aufgabe der Erfindung ist es, einen Beschlag zu schaffen, bei dem der Beschlagkörper an einem Möbelteil mit sehr kleinen Bohrungen sicher gehalten wird.

Die erfindungsgemäße Aufgabe wird dadurch gelöst, daß sowohl der Spreizteil als auch die Spreizhülse durch die Öffnung im Beschlagkörper ragen und von der Sichtfläche des Beschlagkörpers her durch diesen durchgesteckt sind, und daß die Spreizhülse mindestens einen, vorzugsweise zwei nach außen abstehende Lappen aufweist, die in Montagelage an der Sichtfläche des Beschlagkörpers anliegen, wobei der Spreizteil einen Kopf aufweist, der bei montiertem Beschlag auf die Lappen drückt.

Dadurch, daß der Kopf des Spreizteiles auf die Lappen drückt, werden diese in der Richtung zum Möbelteil verformt und die Lappen drücken ihrerseits auf den Beschlagkörper.

Wenn der Beschlagkörper belastet wird, stützt er sich an den Lappen und somit unmittelbar an der Spreizhülse ab. Die Spreizhülse ist im Möbelteil verankert. Wären die Lappen nicht vorgesehen, würde sich der Beschlagkörper am Kopf des schraubenartigen Spreizteiles abstützen. Der Spreizteil könnte jedoch leicht aus der Spreizhülse herausgezogen werden, da er ein nicht selbsthemmendes Gewinde aufweist, mit dem er in die Spreizhülse eingeschraubt ist. Ein Gewinde mit hoher Steigung ist notwendig, damit die Montage und Demontage des Beschlages rasch durchgeführt werden kann.

Damit auf den Beschlagkörper wirkende Kräfte gut auf die Spreizhülse abgeleitet werden, ist in einem Ausführungsbeispiel der Erfindung vorgesehen, daß die Lappen entgegen der Einsteckrichtung der Spreizhülse schräg abstehen und der Kopf des Spreizteiles als Senkkopf oder Linsenkopf ausgebildet ist.

Ein Ausführungsbeispiel der Erfindung sieht vor, daß der Spreizteil mit zwei Außengewinden versehen ist, die unterschiedliche Steigungen aufweisen, wobei vorteilhaft nur eines der Außengewinde selbshemmend ist. Bei einem derartigen Beschlag kann der Spreizteil bei der Montage mittels eines Schraubendrehers in die Spreizhülse geschraubt werden.

Vorteilhaft weist die Spreizhülse ein Muttergewinde auf, in das eines der Gewinde des Spreizteiles eingreift.

Beschlagkörper, Spreizhülse und Spreizteil werden vor der Montage zusammengesetzt, sodaß sie als ein Teil montiert werden können. Dabei ist in einem Ausführungsbeispiel der Erfindung vorgesehen, daß der Spreizteil bei montiertem, aber noch nicht fixiertem Beschlag aus der Spreizhülse herausragt, wobei die Spreizhülse mit ihrem freien Rand in das Gewinde des Spreizteiles eingreift. Erst wenn der Spreizteil vollständig in die Spreizhülse eingedrückt oder eingeschraubt wurde, ist er am Möbelteil fest verankert.

Ein Ausführungsbeispiel der Erfindung sieht vor, daß die Spreizhülse abstehende Arme aufweist, die in Montagelage an der Sichtfläche des Beschlagkörpers anliegen und die abgewinkelte Enden aufweisen, die durch Löcher im Beschlagteil ragen. Vorteilhaft sind die abgewinkelten Enden mit dem Beschlagkörper vernietet.

Nachfolgend wird ein Ausführungsbeispiel der Erfindung anhand der Figuren der beiliegenden Zeichnungen eingehend beschrieben.

Es zeigen:

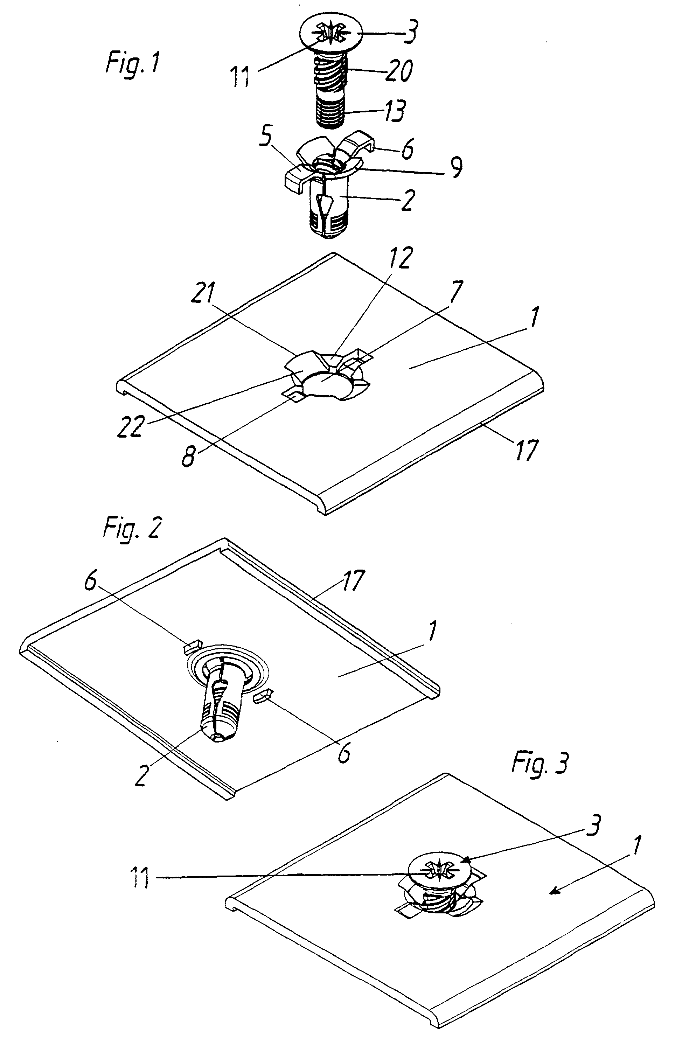

- Die Fig. 1: schaubildlich und auseinandergezogen ein Ausführungsbeispiel eines erfindungsgemäßen Beschlages;
- die Fig. 2: ein Schaubild des Beschlages, wobei die Montageseite des Beschlagkörpers gezeigt ist;
- die Fig. 3: ein Schaubild des Beschlages, wobei die Sichtfläche des Beschlagkörpers gezeigt ist;

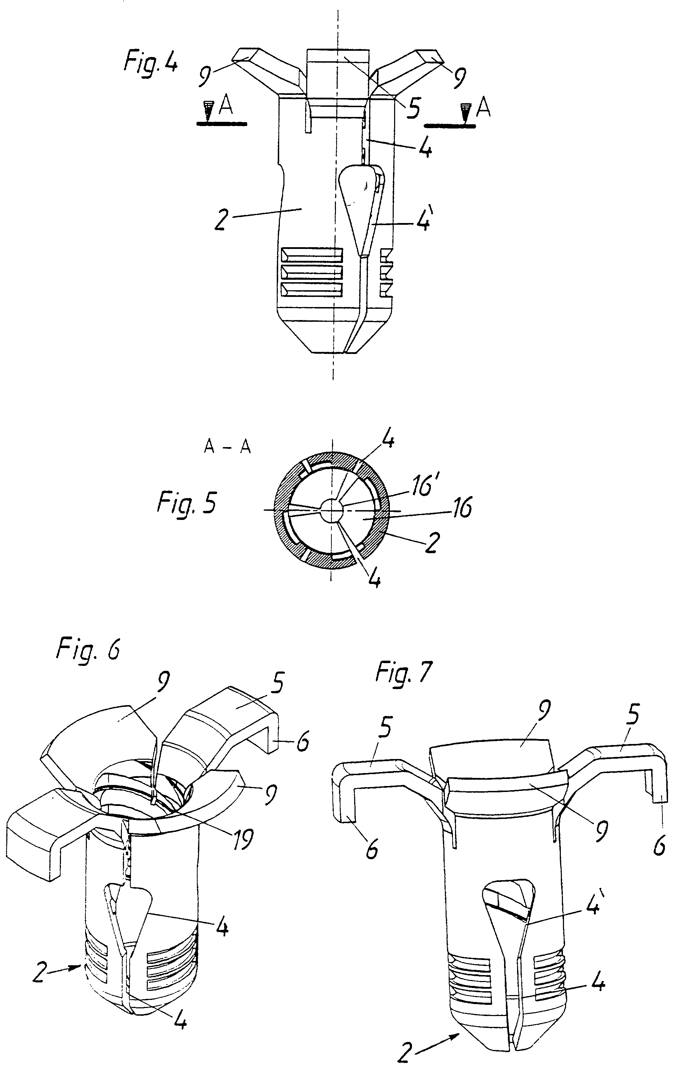

- die Fig. 4: eine Seitenansicht der Spreizhülse;
- die Fig. 5: einen Schnitt nach der Linie A-A der Fig. 4;
- die Fig. 6 und 7: je ein Schaubild einer Spreizhülse;
- die Fig. 8: eine Draufsicht auf den Beschlag;
- die Fig. 9: einen Schnitt nach der Linie A-A der Fig. 8, wobei der Spreizteil in der vormontierten Stellung gezeigt ist;
- die Fig. 10: einen Ausschnitt der Fig. 9;

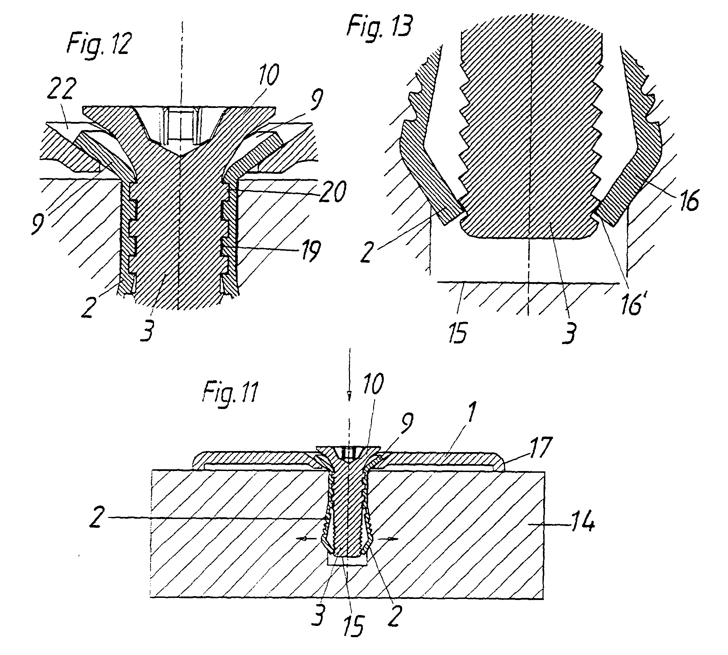

- die Fig. 11: einen Schnitt nach der Linie A-A der Fig. 8, wobei der Spreizteil während des Festziehens gezeigt ist;
- die Fig. 12 und 13: je einen Ausschnitt der Fig. 11;

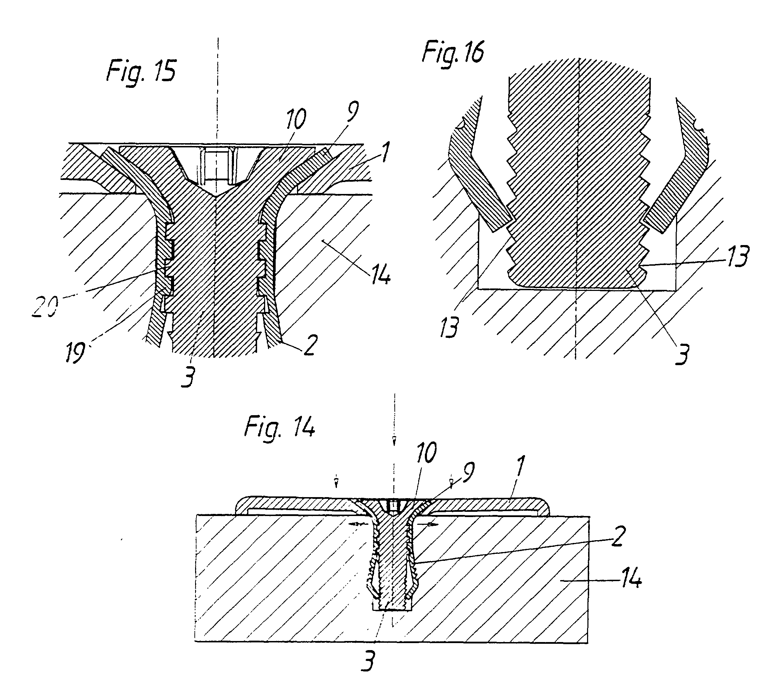

- die Fig. 14: einen Schnitt nach der Linie A-A der Fig. 8, wobei der Spreizteil und die Spreizhülse in der im Möbelteil verankerten Stellung gezeigt sind; und
- die Fig. 15 und 16: je einen Ausschnitt der Fig. 14.

In den gezeigten Ausführungsbeispielen besteht der erfindungsgemäße Beschlag aus einem plattenförmigen Beschlagkörper 1, der beispielsweise als Grundplatte für einen Scharnierarm ausgeführt sein kann, der Spreizhülse 2 und dem stiftförmigen Spreizteil 3.

Die Spreizhülse 2 und/oder der Spreizteil 3 sind vorzugsweise aus vergütetem oder gehärtetem Stahl gefertigt. Weiters kann die Spreizhülse 2 mit einer Phosphatschichtauflage versehen sein. Die Wandstärke der Spreizhülse 2 kann dabei unter einem Millimeter, vorzugsweise in einer Stärke zwischen 0,7 und 0,8 mm gehalten werden.

Im gezeigten Ausführungsbeispiel weist die Spreizhülse 2 vier längsverlaufende Schlitze 4 auf, wobei ein Schlitz 4 durchgehend ausgeführt ist. Zwei der Schlitze 4 weisen etwa in der Mitte der Spreizhülse 2 eine dreieckige Erweiterung 4' auf, die die Verbiegbarkeit der Spreizhülse 2 verbessert. Die Spreizhülse 2 ist mit zwei radial abstehenden Armen 5 mit abgewinkelten Enden 6 versehen.

Der Beschlagkörper 1 weist eine Öffnung 7 auf, durch die die Spreizhülse 2 in den Beschlagkörper 1 einsetzbar ist und weiters ist der Beschlagkörper 1 an seiner Sichtfläche mit Vertiefungen 8 versehen, die bei montierter Spreizhülse 2 die Arme 5 der Spreizhülse 2 aufnehmen. An den Enden der Vertiefungen 8 sind Schlitze vorgesehen, durch die die abgewinkelten Enden 6 der Arme 5 ragen. Nach dem Einsetzen der Spreizhülse 2 in den Beschlagkörper 1 werden die abgewinkelten Enden 6 vernietet, sodaß die Spreizhülse 2 im Beschlagkörper 1 fixiert ist.

Die Spreizhülse 2 weist weiters zwei nach außen abstehende Lappen 9 auf, die ebenso wie die Arme 5 am hinteren Ende der Spreizhülse 2 angeordnet sind. Diese Lappen 9 stehen schräg von der Spreizhülse 2 ab. Der Beschlagkörper 1 ist am Lochrand der Öffnung 7 mit Vertiefungen 21 versehen, die in der Spannstellung der Spreizhülse 2 die Lappen 9 aufnehmen.

Der Spreizteil 3 wird in den gezeigten Ausführungsbeispielen von einem Metallstift gebildet. Er weist einen Kopf 10 auf, der eine Aufnahme 11 für ein Verdrehwerkzeug, im Ausführungsbeispiel einen Kreuzschraubendreher, aufweist. Der Kopf 10 ist als Senkkopf ausgebildet. In Montagelage ist der Kopf 10 in einer Versenkung 12 des Beschlagkörpers 1 aufgenommen und drückt die Lappen 9 auf die Schrägflächen 22 der Vertiefungen 21 und in der Folge den an die Spreizhülse 2 anschließenden Bereich des Beschlagkörpers 1 an die Möbelseitenwand.

Der Spreizteil 3 ist mit zwei Gewinden 13, 20 versehen.

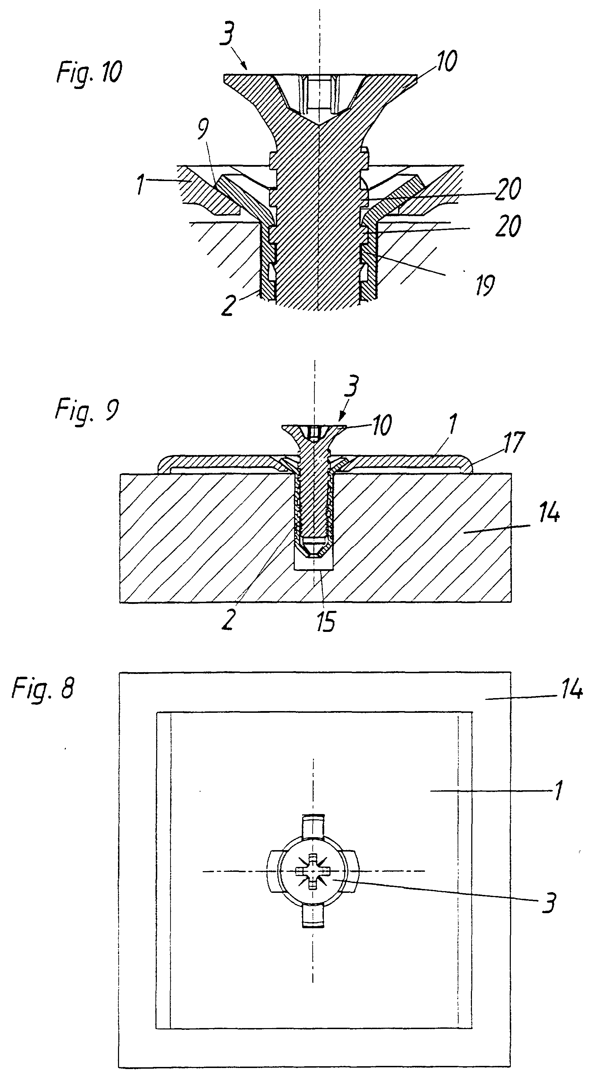

Vor der Montage des Beschlagkörpers 1 an der Möbelseitenwand 14 wird der Spreizteil 3 so weit in die im Beschlagkörper 1 verankerte Spreizhülse 2 hineingesteckt, daß es noch zu keiner Spreizung der Spreizhülse 2 kommt. Somit ist die Einheit bestehend aus dem Beschlagkörper 1, der Spreizhülse 2 und dem Spreizteil 3 in die Bohrung 15 in der Möbelseitenwand 14 einsetzbar. Diese Situation ist in der Fig. 9 gezeigt.

Zur Fixierung des Beschlagkörpers 1 wird der Spreizteil 3 so weit in die Spreizhülse 2 und die Bohrung 15 eingeschraubt, daß sein Kopf 10 in der Versenkung 12 des Beschlagkörpers 1 aufgenommen wird. Der Spreizteil 3 ragt dabei mit seinem im Inneren der Bohrung 15 befindlichen Ende aus der Spreizhülse 2 heraus und die Abschnitte der Spreizhülse 2 werden in die Wand der Bohrung 15 gedrückt.

Die schräg nach vorne zum Spreizteil 3 weisenden Endabschnitte 16 der Spreizhülse 2 rasten dabei im Gewinde 13 des Spreizteiles 3 ein. Dabei sind die Ränder 16' der Endabschnitte 16 derart abgeschrägt, daß sie der Steigung des Gewindes 13 angepaßt sind.

Soll der Beschlagkörper 1 von der Möbelseitenwand 14 gelöst werden, wird der Spreizteil 3 mittels eines Schraubenziehers im Gegenuhrzeigersinn verdreht.

Dadurch, daß sich die Enden 16 der Spreizhülse 2 im Gewinde 13 abstützen, wird der Spreizteil 3 aus der Spreizhülse 2 herausgedreht. Sobald der Kopf 10 des Spreizteiles 3 vom Beschlagkörper absteht, kann der Spreizteil 3 aus der Spreizhülse 2 herausgezogen werden. Teilweise wird der Spreizteil 3 bereits durch die Eigenspannung der Lappen 9 der Spreizhülse 2 aus dieser herausgedrückt.

Der Spreizteil 2 weist zwei Gewinde 13, 20 auf. Dabei ist das Gewinde 13, das sich an dem dem Kopf 10 gegenüberliegenden Ende des Spreizteiles 3 befindet, selbsthemmend gewählt. Das Gewinde 20 weist hingegen eine hohe Steigung auf.

Die Spreizhülse 2 weist am Innenmantel ein Muttergewinde 19 auf, das mit dem Außengewinde 20 des Spreizteiles 3 korrespondiert. Die Gewindegänge beider Gewinde 19, 20 weisen rechteckige Querschnitte auf. Dadurch, daß die Steigungen der Gewinde 19, 20 relativ steil sind, kann der Spreizteil 3 bei der Montage des Beschlages schnell in die Spreizhülse 2 eingeschraubt werden.

Nach dem Eindrehen des Spreizteiles 3 drücken die Lappen 9 der Spreizhülse 2 auf die Schrägflächen 22 der Vertiefungen 21 und drücken den Beschlagkörper 1 in diesen Bereich an die Möbelseitenwand 14. Der Beschlagkörper 1 stützt sich dabei mit abgewinkelten Rändern 17 an der Möbelseitenwand 14 ab. Dadurch kommt es zu einer Vorspannung im Beschlagkörper 1.

## Patentansprüche

1. Beschlag zur lösbaren Befestigung an einem Möbelteil mit einem am Möbelteil anliegenden, vorzugsweise plattenförmigen Beschlagkörper, mit einer möbelseitigen Montagefläche und einer gegenüberliegenden Sichtfläche, mindestens einer im Beschlagkörper verankerten Spreizhülse, die in eine Bohrung des Möbelteiles einsetzbar ist, und einem stiftförmigen Spreizteil für die Spreizhülse, der mit einem Außengewinde versehen ist und der durch eine Öffnung im Beschlagkörper ragt, wobei er von der Sichtfläche des Beschlages durch diesen durchgesteckt ist, **dadurch gekennzeichnet, daß** sowohl der Spreizteil (3) als auch die Spreizhülse (2) durch die Öffnung (7) im Beschlagkörper (1) ragen und von der Sichtfläche des Beschlagkörpers (1) her durch diesen durchgesteckt sind, und daß die Spreizhülse (2) mindestens einen, vorzugsweise zwei nach außen abstehende Lappen (9) aufweist, die in Montagelage an der Sichtfläche des Beschlagkörpers (1) anliegen, wobei der Spreizteil (3) einen Kopf (10) aufweist, der bei montiertem Beschlag auf die Lappen (9) drückt.

2. Beschlag nach Anspruch 1, **dadurch gekennzeichnet, daß** die Lappen (9) entgegen der Einsteckrichtung der Spreizhülse (2) schräg abstehen und der Kopf (10) des Spreizteiles (3) als Senkkopf oder Linsenkopf ausgebildet ist.

3. Beschlag nach Anspruch 1 oder 2, **dadurch gekennzeichnet, daß** die Spreizhülse (2) mit einem in Längsrichtung durchgehenden Schlitz (4) versehen ist.

4. Beschlag nach Anspruch 3, **dadurch gekennzeichnet, daß** der durchgehende Schlitz (4) sich im mittleren Bereich, vorzugsweise annähernd dreiecksförmig erweitert.

5. Beschlag nach einem der Ansprüche 1 bis 4, **dadurch gekennzeichnet, daß** der Beschlag an seiner Sichtfläche mit Vertiefungen (21) versehen ist, die die Lappen (9) aufnehmen und die vorzugsweise eine schräge Auflagefläche (22) für die Lappen (9) aufweisen.

6. Beschlag nach einem der Ansprüche 1 bis 5, **dadurch gekennzeichnet, daß** der Spreizteil (2) mit zwei Außengewinden (13, 20) versehen ist, die unterschiedliche Steigungen aufweisen.

7. Beschlag nach einem der Ansprüche 1 bis 6, **dadurch gekennzeichnet, daß** die Spreizhülse (2) abgewinkelte Endabschnitte (16) aufweist, mit Rändern (16'), die in Umfangsrichtung so verlaufen, daß sie in das Gewinde (13) bzw. eines der Gewinde (13, 20) des Spreizteiles (3) eingreifen.

8. Beschlag nach Anspruch 6, **dadurch gekennzeichnet, daß** nur eines der Außengewinde (13) selbsthemmend ist.

9. Beschlag nach den Ansprüchen 1 bis 8, **dadurch gekennzeichnet, daß** die Spreizhülse (2) ein Muttergewinde (19) aufweist, in das eines der Gewinde (20) des Spreizteiles (3) eingreift.

10. Beschlag nach einem der Ansprüche 1 bis 9, **dadurch gekennzeichnet, daß** der Beschlagkörper (1) zumindestens im Bereich der Lappen (9) elastisch durchbiegbar ist.

11. Beschlag nach einem der Ansprüche 1 bis 10, **dadurch gekennzeichnet, daß** die Spreizhülse (2) abstehende Arme (5) aufweist, die in Montagelage an der Sichtfläche des Beschlagkörpers (1) anliegen und die abgewinkelte Enden (6) aufweisen, die durch Löcher im Beschlagteil (1) ragen (Fig. 1 und 2).

12. Beschlag nach Anspruch 11, **dadurch gekennzeichnet, daß** die abgewinkelten Enden (6) mit dem Beschlagkörper (1) vernietet sind.

13. Beschlag nach Anspruch 11 oder 12, **dadurch gekennzeichnet, daß** der Beschlagkörper (1) sichtflächenseitige Vertiefungen (8) aufweist, in denen die Arme (5) der Spreizhülse (2) aufgenommen sind.

14. Beschlag nach einem der Ansprüche 1 bis 13, **dadurch gekennzeichnet, daß** der Spreizteil (3) und/oder die Spreizhülse (2) aus vergütetem Stahl gefertigt ist bzw. sind.

15. Beschlag nach einem der Ansprüche 1 bis 13, **dadurch gekennzeichnet, daß** der Spreizteil (3) und/oder die Spreizhülse (2) aus gehärtetem Stahl gefertigt ist bzw. sind.

## Claims

1. Fitting for detachable fastening to a furniture part with a preferably plate like Fitting body abutting the furniture part, with a mounting plane on the furniture side and a visible surface on the opposite side, at least one expansion sleeve, anchored to the Fitting body, which is insertable into a drilled hole of the furniture part and with a pin shaped expansion member for the expansion sleeve which is provided with a male thread and which projects through an opening in the Fitting body, whereby it is pushed in from the side of the visible surface of the fitting, **characterised in that** the expansion member (3) as well as the expansion sleeve (2) project through the opening (7) in the Fitting body (1) and are pushed through from the side of the visible surface of the Fitting body (1) and **in that** the expansion sleeve (2) is provided with at least one preferably two flaps (9) projecting sideways, which, in the mounted position, abut the visible surface of the fitting body (1), whereby the expansion member (3) is provided with a head (10) which bears against the flap (9) when the Fitting is mounted.

2. Fitting according to claim 1, **characterised in that** the flaps (9) are inclined in a direction opposed to the push in direction of the expansion sleeve (2) and the head (10) of the expansion member (3) is a flat head or an oval head.

3. Fitting according to claim 1 or 2, **characterised in that** the expansion sleeve (2) is provided with a longitudinal through going slot (4).

4. Fitting according to claim 3, **characterised in that** the through going slot (4) is widened in a middle region, at least approximately in the form of a triangle.

5. Fitting according to one of claims 1 to 4, **characterised in that** the Fitting is provided with recesses (21) on the side of its visible surface in which the flaps (9) are situated and which preferably have a slanting abutment plane (22) for the flaps (9).

6. Fitting according to one of claims 1 to 5, **characterised in that** the expansion member (3) is provided with two male threads (13, 20) which have different pitches.

7. Fitting according to one of claims 1 to 6, **characterised in that** the expansion sleeve (2) is provided with angular ends (16) with rims (16') which run in circumferential direction in such a way that they engage in the thread (13) or in one of the threads (13, 20) of the expansion member (3).

8. Fitting according to claim 6, **characterised in that** only one of the male threads (13) is self locking.

9. Fitting according to the claims 1 to 8, **characterised in that** the expansion sleeve (2) is provided with a female thread (19) mating with one of the threads (20) of the expansion member (3).

10. Fitting according to one of claims 1 to 9, **characterised in that** the Fitting body (1) is, at least in the region of the flaps (9), elastically deformable.

11. Fitting according to one of claims 1 to 10, **characterised in that** the expansion sleeve (2) is provided with projecting arms (5) which in the mounted position abut the side of the visible surface of the fitting body (1) and which are provided with bend ends (6) which protrude through holes in the Fitting body (1) (Figs. 1 and 2).

12. Fitting according to claim 11, **characterised in that** the ends (6) are riveted to the fitting body (1).

13. Fitting according to claim 11 or 12, **characterised in that** the Fitting body (1) is, on the side of the visible surface provided with recesses (8) in which the arms (5) of the expansion sleeve (2) are situated.

14. Fitting according to one of claims 1 to 13, **characterised in that** the expansion member (3) and/or the expansion sleeve (2) are made of tempered steel.

15. Fitting according to one of claims 1 to 13, **characterised in that** the expansion member (3) and/or the expansion sleeve (2) are made of hardened steel.

## Revendications

1. Ferrure à fixer de manière séparable sur une partie de meuble, avec un corps de ferrure, de préférence en forme de plaque, adjacent à la partie de meuble, avec une surface de montage côté meuble et une surface visible opposée, au moins une douille d'écartement ancrée dans le corps de ferrure, qui peut être insérée dans un orifice de la partie de meuble, et une pièce d'écartement en forme de goujon qui est prévue pour la douille d'écartement, est munie d'un filetage extérieur et pénètre dans le corps de ferrure par une ouverture, étant enfoncée depuis la surface visible de la ferrure à travers celle-ci, **caractérisée en ce que** la pièce d'écartement (3), ainsi que la douille d'écartement (2), pénètrent dans le corps de ferrure (1) à travers l'orifice (7) et sont enfoncées à partir de la surface visible du corps de ferrure (1) à travers celui-ci et **en ce que** la douille d'écartement (2) présente au moins une, de préférence deux languettes (9) s'éloignant vers l'extérieur qui reposent, dans la position de montage, sur la surface visible du corps de ferrure (1), la pièce d'écartement (3) présentant une tête (10) qui appuie sur les languettes (9) lorsque la ferrure est montée.

2. Ferrure selon la revendication 1, **caractérisée en ce que** les languettes (9) s'éloignent à l'oblique en sens inverse de la direction d'enfoncement à la douille d'écartement (2) et la tête (10) de la pièce d'écartement (3) est formée comme une tête fraisée ou une tête bombée.

3. Ferrure selon la revendication 1 ou 2, **caractérisée en ce que** la douille d'écartement (2) est munie d'une fente (4) continue dans le sens longitudinal.

4. Ferrure selon la revendication 3, **caractérisée en ce que** la fente continue (4) s'élargit dans la zone centrale, de préférence approximativement en forme de triangle.

5. Ferrure selon l'une des revendications 1 à 4, **caractérisée en ce que** la ferrure est munie sur sa face visible d'encoches (21) qui reçoivent les languettes (9) et qui présentent de préférence une surface d'appui oblique (22) pour les languettes (9).

6. Ferrure selon l'une des revendications 1 à 5, **caractérisée en ce que** la pièce d'écartement (3) est munie de deux filetages extérieurs (13, 20) qui présentent des pas différents.

7. Ferrure selon l'une des revendications 1 à 6, **caractérisée en ce que** la douille d'écartement (2) présente des segments d'extrémité (16) coudés, avec des bords (16') qui s'étendent dans le sens périphérique de façon à s'engager dans le filetage (13), respectivement l'un des filetages (13, 20), de la pièce d'écartement (3).

8. Ferrure selon la revendication 6, **caractérisé en ce que** seul l'un des filetages extérieurs (13) est autobloquant.

9. Ferrure selon les revendications 1 à 8, **caractérisé en ce que** la douille d'écartement (2) présente un filet femelle (19) dans lequel s'engage l'un des filetages (20) de la pièce d'écartement (3).

10. Ferrure selon l'une des revendications 1 à 9, **caractérisée en ce que** le corps de ferrure (1) peut se fléchir de manière élastique au moins dans la zone des languettes (9).

11. Ferrure selon l'une des revendications 1 à 10, **caractérisée en ce que** la douille d'écartement (2) présente des bras (5) s'éloignant, qui reposent dans la position de montage contre la surface visible du corps de ferrure (1) et qui présentent des extrémités coudées (6) qui pénètrent par des trous dans la pièce de ferrure (1) (figures 1 et 2).

12. Ferrure selon la revendication 11, **caractérisée en ce que** les extrémités coudées (6) sont rivetées avec le corps de ferrure (1).

13. Ferrure selon la revendication 11 ou 12, **caractérisée en ce que** le corps de ferrure (1) présente des creux (8) côté surface visible, dans lesquels les bras (5) de la douille d'écartement (2) sont logés.

14. Ferrure selon l'une des revendications 1 à 13, **caractérisée en ce que** la pièce d'écartement (3) et/ou la douille d'écartement (2) est ou sont réalisée(s) en acier trempé et revenu.

15. Ferrure selon l'une des revendications 1 à 13, **caractérisée en ce que** la pièce d'écartement (3) et/ou la douille d'écartement (2) est ou sont réalisée(s) en acier trempé.
